# EUROPEAN PATENT SPECIFICATION

(11) **EP 4 309 991 B1**
(45) Date of publication and mention of the grant of the patent: **22.07.2026**
(21) Application number: 22306099.7
(22) Date of filing: 22.07.2022
(51) Int. Cl.: B63B 21/20, D07B 1/14

(54) **OFFSHORE MOORING STRUCTURE INTENDED TO CONNECT A SURFACE ASSEMBLY TO AN UNDERWATER ANCHOR, AND RELATED OFFSHORE INSTALLATION**
OFFSHORE-VERANKERUNGSSTRUKTUR ZUM VERBINDEN EINER OBERFLÄCHE MIT EINEM UNTERWASSERANKER UND ZUGEHÖRIGE OFFSHORE-ANLAGE
STRUCTURE D'AMARRAGE EN MER DESTINÉE À RACCORDER UN ENSEMBLE DE SURFACE À UN ANCRAGE SOUS-MARIN ET INSTALLATION EN MER ASSOCIÉE

(43) Date of publication of application: 24.01.2024
(73) Proprietor: TechnipFMC Subsea France, 92400 Courbevoie (FR)
(72) Inventor: PALLIN, Nicolas, 1396 BILLINGSTAD (NO); DEIGHTON, Alan, SUNDERLAND, SR2 9HY (GB)
(74) Representative: Lavoix

(56) References cited:
- EP-A1- 3 343 183
- EP-A1- 3 971 343
- CN-A- 114 537 586

## Description

The present invention concerns an offshore mooring structure intended to connect a surface assembly to an underwater anchor.

EP 3 971 343 discloses a mooring system comprising mooring wires with integrated cable. EP 3 343 183 discloses a mooring line with an optical fiber.

The offshore mooring structure is in particular intended to be used in an offshore installation which produces or consumes electrical power. The offshore installation is for example a wind farm and/or a tidal power farm, intended to produce electricity from wind power or tidal power.

Offshore wind farms become more and more common to produce renewable energy from the winds blowing in offshore locations.

Offshore locations are advantageous for locating wind farms. Offshore locations generally undergo regular and strong winds, and do not create disturbances for populations in comparison to onshore wind farms.

In offshore installations, a strong anchoring of each surface assembly carrying a wind turbine is required to resist winds, currents and swell.

There is also a need to collect the produced electrical power and to transport it to an offshore location at which it can be used or it can be transformed offshore and then transported to an onshore location.

In traditional offshore wind farms, each surface assembly is anchored to the bottom of the body of water by several mooring lines made of non-electrical cable.

The mooring is set up as a tension leg platform, a semi-submersible platform, or as a spar buoy.

In addition to the mooring, the electrical power produced in the wind farm is generally collected through dynamic power cables connecting each wind turbine to a subsea power station and then connecting the subsea power station to the onshore location.

Such an installation therefore requires a high number of mooring lines, a complex laying of dynamic high voltage cable, equipped with buoys to withstand the displacements of the surface assembly, and the provision of an expensive and complex subsea power substation.

One aim of the invention is to offer an offshore mooring structure to connect surface assemblies and anchors in an offshore installation such as a wind farm, which is simpler and cheaper to set up, while simplifying the electrical layout necessary to the offshore installation.

To this aim, the subject matter of the invention is an offshore mooring structure according to claim 1.

The offshore mooring structure according to the invention may comprise one or more of the features of claims 2 to 8, or any of the following features, taken solely or according to any technical feasible combination.
- the high voltage cable comprises an internal reinforcement layer located between the barrier layer and the outer serving;
- the high voltage cable is without internal reinforcement layer located between the barrier layer and the outer serving;
- a ratio of a tensile strength at break of the offshore mooring structure comprising the high voltage cable and the at least one external armor layer to a tensile strength at break of the high voltage cable without the at least one external armor layer is greater than 1,1.

The invention also concerns an offshore installation according to claim 9.

The offshore installation according to the invention may comprise one or more of the features of claims 10 to 15, taken solely or according to any technical feasible combination.

The invention will be better understood, based on the following description, given solely as an example, and made in reference to the following drawings, in which:
- [Fig. 1] Figure 1 is a schematic top view of a first offshore installation according to the invention;
- [Fig. 2] Figure 2 is a schematic perspective view of a surface assembly comprising a wind turbine anchored with an offshore mooring structure according to the invention;
- [Fig. 3] Figure 3 is a side view of an anchor, in which a lower end of the offshore mooring structure according to the invention is attached and electrically connected;
- [Fig. 4] Figure 4 is a schematic side view of the anchor of figure 3 in which the electrical connection between an anchor connector and the offshore mooring structure according to the invention is represented;
- [Fig. 5] Figure 5 is a partly exploded perspective view of a unmodified high voltage cable;
- [Fig. 6] Figure 6 is a partly exploded perspective view of a modified high voltage cable included in the offshore mooring structure according to the invention;
- [Fig. 7] Figure 7 is a schematic cross section, taken a longitudinal median plane of an end fitting of the offshore mooring structure according to the invention;
- [Fig. 8] Figure 8 is a top view of an anchor, in an alternate installation according to the invention;
- [Fig. 9] Figure 9 is an exploded perspective view of an alternative embodiment of the high voltage cable of figure 6, having a single conductor.

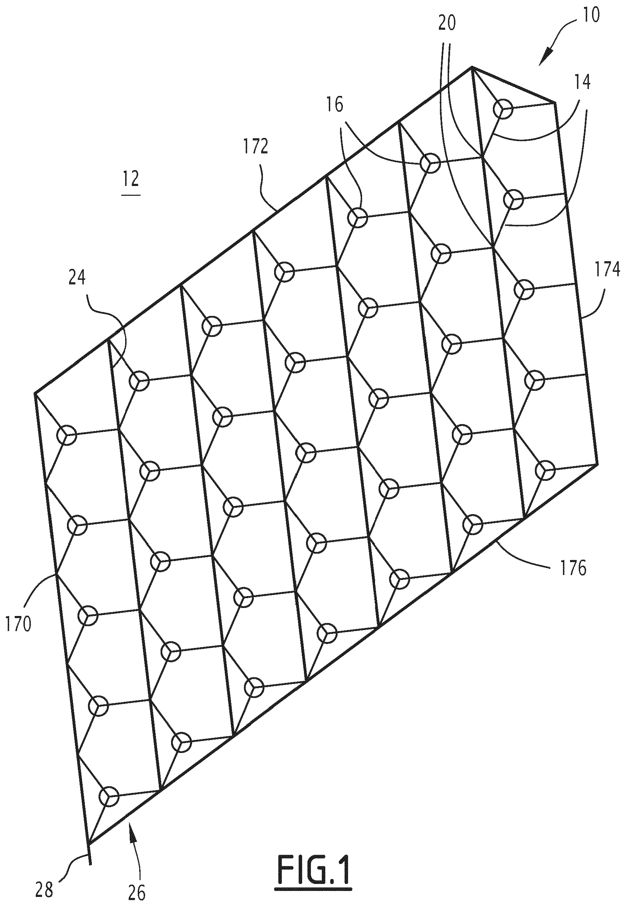

A first offshore installation 10 comprising offshore mooring structures 14 according to the invention, located in a body of water 12, is depicted in figures 1 to 5.

The body of water 12 is for example a river, sea, lake, or ocean. The depth of the body of water 12 at the installation 10 is for example comprised between 10 m and 4000 m.

The offshore installation 10 is here an installation able to produce electrical power from natural resources such as winds, currents and tides. The installation 10 is for example a wind farm or a tidal power farm.

In a variant, the installation 10 is an installation able to consume electrical power, for example to produce liquids and/or gases by electrolysis to store energy produced by a electrical power producing installation. Alternatively, the installation 10 is a floating installation like an exploitation platform of a Floating Production, Storage and Offloading (FPSO) structure.

The average electrical power produced or consumed by the installation 10 is advantageously greater than 5 MW, preferably greater than 10 MW and more preferably greater than 15 MW.

The voltage involved in the production consumption or transport of electrical power in the installation 10 through the offshore mooring structure 14 is generally greater than 30 kV and comprised between 60 kV and 250 kV.

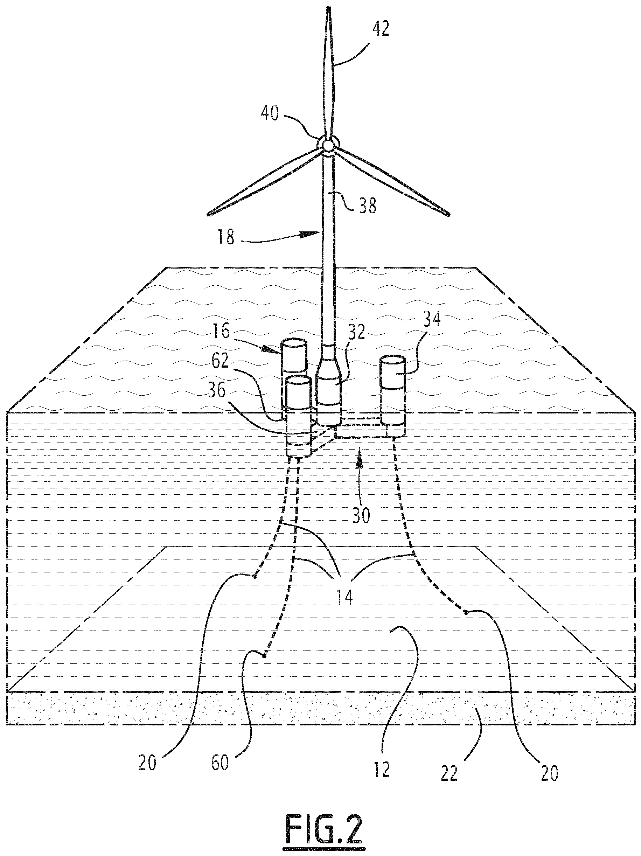

As shown in figures 1 and 2, the installation 10 comprises a plurality of surface assemblies 16. It further comprises equipment 18 (see figure 2) carried on each surface assembly 16, the equipment 18 being able to produce or consume electrical power.

The installation 10 further comprises anchors 20 fixed in the bottom 22 of the body of water 12.

The installation 10 further comprises offshore mooring structures 14 according to the invention mechanically and electrically connecting the anchors 20 to the surface assembly 16 to maintain the surface assembly 16 in position.

In the example of figure 1, the installation 10 further comprises collection strips 24, electrically connecting connectors on several anchors 20, and a peripheral export ring 26 connecting the collection strips 24 to an onshore export cable 28.

Advantageously, in order to optimize space and mutualize anchorage, the surface assemblies 16 are located at positions defining a regular pattern, for example, a triangular pattern commonly named "star configuration".

The number of surface assemblies 16 is greater than 10, in particular comprised between 20 and 50.

In the example shown in figures 1 and 2, each surface assembly 16 comprises a platform 30, defining at least a deck 32 on which the equipment 18 is carried.

In the example of the figure 2, the platform 30 is a semi-submersible platform having floats 34 and ribs 36 connecting the floats 34.

In a variant not shown, the platform 30 is a spar platform having a spar buoy whose height is greater than its transverse extent, the spar buoy carrying the equipment 18.

The equipment 18 is here able to produce electrical power from renewable resources such as winds, currents and tides. In the example of figure 2, the equipment 18 is a wind turbine having a mast 38, a generator 40 and blades 42, which are rotatable under the effect of winds. The rotation of the blades 42 rotates a rotor of the generator 40, which produces electrical power in the stator of the generator 40.

In the example of figure 1, each anchor 20 is shared by a plurality of surface assemblies 16. Each surface assembly 16 is anchored to at least three anchors 20. Each anchor 20 anchors at least three surface assemblies 16.

The anchors 20 therefore define a triangular pattern inserted in the triangular pattern of the surface assemblies 16. Thus, the surface assemblies 16 and the anchors 20 define a hexagonal pattern visible in figure 1.

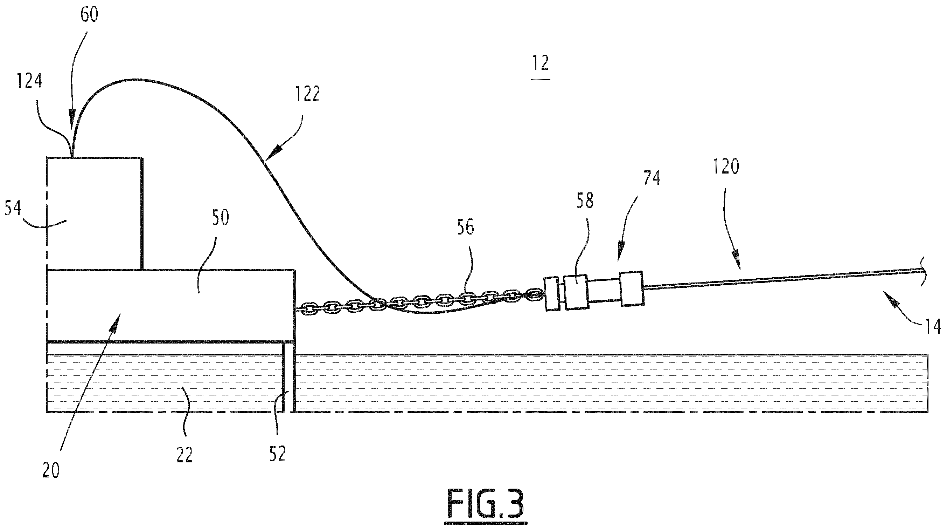

As shown in the example of figure 3, each anchor 20 comprises a subsea foundation structure in a form of a base 50, protruding outside of the bottom 22 of the body of water 12 and at least a leg 52 inserted in the bottom of the body 22 of water 12 to fix the anchor 20.

Each anchor 20 further comprises a high voltage electrical connector 54 able to connect at least an offshore mooring structure 14 to a collection strip 24.

In the example of the figure 3, the base 50 is a table on which the connector 54 is fixed.

The base 50 further comprises, for each offshore mooring structure 14 connected to the anchor 20, at least a flexible link 56 attached to the base 50, and protruding radially from the base 50 and at least a support 58 to receive an end of the offshore mooring structure.

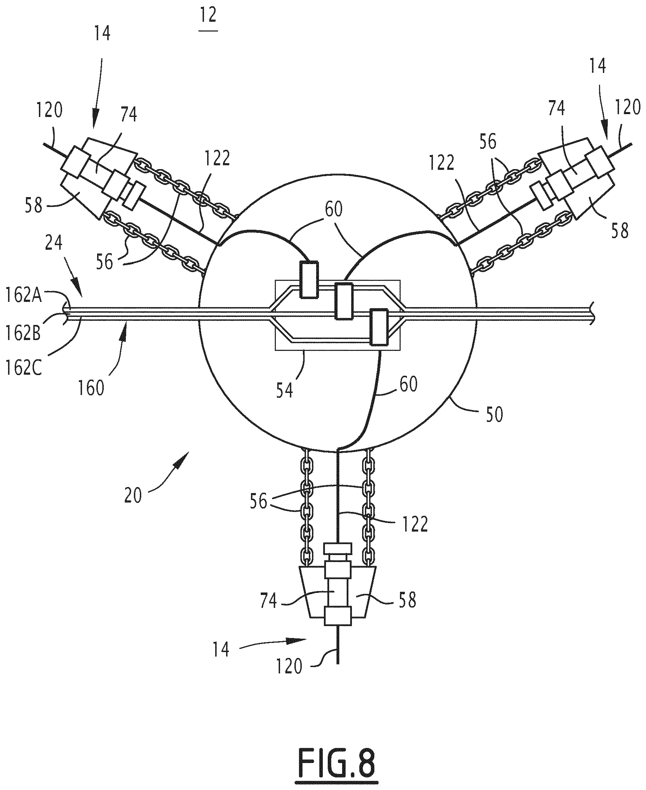

As shown for example in figure 8, the anchor 20 comprises for each offshore mooring structure 14 to which it is connected, two parallel links 56 connecting the base 50 to the support 58. Each link 56 is here formed of a chain. In variant, each link 56 is formed of cable, in particular reinforced non-electrical cable, of a wire or of a rigid anchor link such as a delta plate. For example, the cable may be a steel, a polymeric or a composite cable.

The links 56 connect a periphery of the table to the support 58. The length of each link 56 is for example greater than 0.50 m.

The legs 52 are for example inserted in force into the bottom 22 of the body of water 12. In a variant, the leg 52 is a suction pile or any other classical anchor in the bottom of the body of water.

In the examples of figures 1 to 2, each surface assembly 16 is connected to at least three anchors 20 through mooring structures, at least one of which being an offshore mooring structure 14 according to the invention.

Each mooring structure, including the offshore mooring structure 14 according to the invention, has a catenary shape. By "catenary shape", it is meant that the shape is substantially the shape of J with a substantially concave profile along all its length from a lower end 60 connected to the anchor 20 to an upper end 62 connected to the surface assembly 16.

Each mooring structure is without buoy or float. Hence, the mooring structure is without an elevated convex structure having a wave shape, a S shape of lazy S shape.

The offshore mooring structure 14 according to the invention has a double functionality.

The offshore mooring structure 14 offers mechanical properties to allow the mooring of the surface assembly 16 while resisting tensile strength applied on the offshore mooring structure 14 under the effect of winds, swell, currents and tides. The offshore mooring structure 14 also offer electrical high voltage conduction functions, to convey high voltage electrical power between the equipment 18 carried by the surface assembly 16 and the connector 54 borne on the anchor 20.

As shown in figures 3, 4 and 6, the offshore mooring structure 14 comprises an inner pseudo-dynamic high voltage cable 70, an optional internal leak-proof sheath 71A extruded around the high voltage cable 70 to fluidly isolate the high voltage cable 70 from the surrounding environment, an intermediate radial load withstanding layer 71B and at least and one tensile armor 72 wound around the intermediate radial load withstanding layer 71B to provide tensile strength to the offshore mooring structure 14 and a mechanical protection against external damage as well. The offshore mooring structure 14 optionally comprises an external leak-proof sheath 73 disposed around the tensile armor.

The offshore mooring structure 14 further comprises, at least at its lower end 60 an end fitting 74 connected to the support 58 on the anchor 20.

The pseudo-dynamic high voltage cable 70 is obtained from a modified or unmodified three-core (3C) high voltage submarine power cable for example made according to standard IEC 60183:2015 and/or IEC 60840:2020 and/or IEC 63026:2019 published by the International Electrotechnical Commission (IEC).

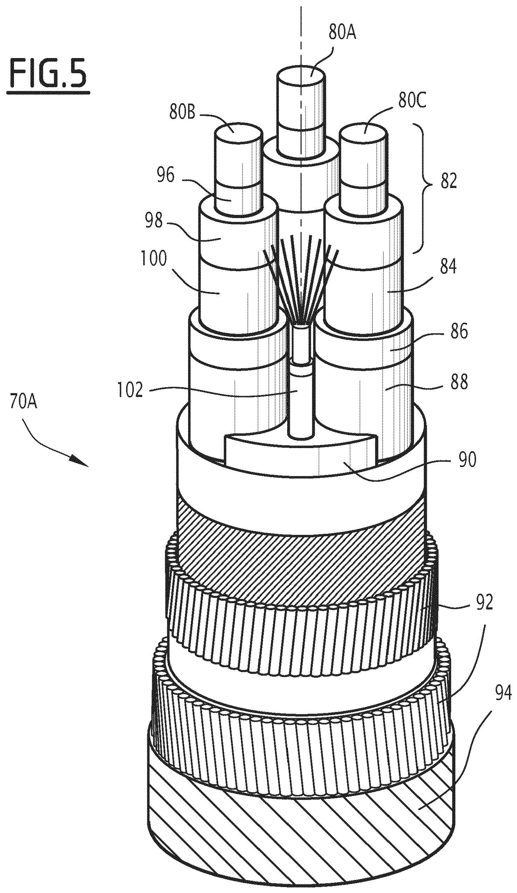

An unmodified 3C high voltage submarine power cable 70A is depicted in Figure 5. It comprises three conductors 80, each surrounded by a protective structure comprising a dielectric system 82, optionally a swelling tape 84, a metallic sheath 86, and advantageously a protective shield 88.

In the example of the figure 5, the unmodified high voltage cable 70A further comprises fillers 90 separating the conductors 80, and reinforcement layers 92. It also comprises an outer serving 94.

The conductor is generally made from either copper or aluminum. It generally has an electrical conductivity greater than 3.0×10⁷ S/m .

The voltage able to be transmitted through the conductor(s) 80 is greater than 60 kV, and is comprised between 66 kV and 500 kV. For example, an offshore AC transmission cable may be able to transmit a voltage comprised between 60 kV and 225 kV for a three-core submarine high voltage power cable design and can be up to 400 kV for a single core submarine high voltage power cable.

Each conductor 80 is either made of one strand which can be round, oval or hollow or of several strands which can define a round profile or hollow profile. In variant, each conductor 80 is be made of segmental conductors.

In this example, the dielectric system 82 comprises a conductor screen 96, an insulation layer 98, and an isolation screen 100.

The conductor screen 96 is an earth or return conductor and also provides electromagnetic shielding. It generally comprises a metallic foil wrapped with overlap and/or braided or lapped metallic wires. The foil and/or the wires are generally made with copper or aluminium.

In a variant, the conductor screen 96 is a semi conductor layer which does not provide earth or return conductor function. The conductor screen 96 is merely used to round off the conductor 80, especially if it is stranded.

The thickness of the conductor screen 96 is generally smaller than 2 mm. The conductor screen 96 is only a conductor and or electromagnetic shield. Its ultimate tensile strength is smaller than 70MPa. The electrical conductivity of the conductor screen 96 is advantageously greater than 2.9x10⁷ S/m at 20 °C.

The insulation layer 98 is for example extruded around the conductor screen 96. It provides electrical insulation layer around each conductor 80. It is made for example of cross-linked polyolefin, in particular crosslinked polyethylene. The crosslinked polyethylene is preferably made of a water tree retardant grade to prevent tree growth, which can eventually lead to electrical breakdown when the cable 70A is immersed in water whilst under electrical stress.

The DC volumetric electrical resistivity of the insulation layer 98 is much greater than the DC volumetric electrical resistivity of the conductor screen 96. It is generally greater than 10x10¹⁵ ohm.cm at 20 °C.

The isolation screen 100 prevents high electrical stress points from protruding points of the outer structure of the high voltage cable 70A.

The isolation screen 100 is preferably made of a polymer, doped uniformly with conductive material. Its DC volumetric electrical resistivity is generally much higher than conductor screen 96, for example at least 10 times higher, advantageously at least 100 times higher, but much less than the insulation layer 98, at least 10 times less, advantageously at least 100 times less.

The swelling tape 84 is added to the cable to avoid moisture diffusion into the cable. It advantageously comprises a swelling agent which can be in the form of powder and/or yarns and/or hydrophobic compounds or gels.

The swelling agent is able to suck moisture in the high voltage cable 70A.

In this example, the metallic sheath 86 is a water blocking sheath ("dry design"). It prevents water ingression into the dielectric system 82 and conductor 80. The metallic sheath 86 is fluid tight, and defines a dry design. It is made of layer of smooth metal. The metal is for example lead, aluminum, copper, stainless steel. In a variant with no metallic sheath 86, a polymeric sheath provides a radial water barrier at moderate costs, providing excellent chemical and mechanical stability over a long life. The polymer is for example high-density polyethylene, polyvinyl chloride, polyamide.

Sometimes, the polymeric sheath is made from semi-conducting polyethylene materials loaded with fillers such as carbon-black particles.

The protective layer 88 is for example made of a polymer layer.

The fillers 90 mechanically separate the conductors 80 equipped with the protective structures, one from another. They define internal hollow canals between the conductors 80. They are for example made of shaped polymer or composite pieces having through cavities.

The reinforcement layer 92 comprises one or more layers of round or flat metal wires mainly made of steel, preferably mild steel, wrapped around the fillers 90 when present, or wrapped around the protective layer 88.

The reinforcement wires are laid helically with a helix angle generally comprised between 20° and 60 °.

The outer serving 94 may be made from wound yarn layers but it is advantageously made of a polymeric material, in particular based on a polyolefin, such as polyethylene, or based on a polyamide, such as PA11 or PA12.

The thickness of the outer serving 94 is for example comprised between 5 mm and 15 mm. It is generally extruded around the reinforcement layers 92.

Advantageously, the high voltage cable 70A comprises at least a bundle 102 of optical fibers, inserted between the conductors 80 into a longitudinal canal defined in the fillers 90.

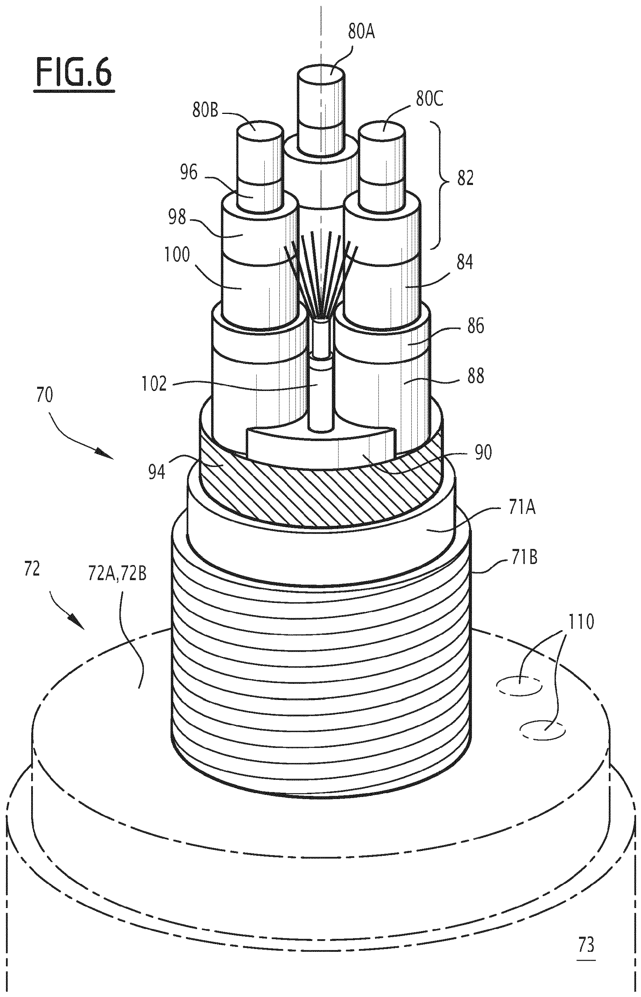

A modified high voltage cable 70 is shown in Figure 6.

It may differ from the unmodified high voltage cable 70A in that the metallic sheath 86 is not watertight and allows water to permeate to the insulation screen 100. The metallic sheath is then made of a metallic screen used only for carrying charging currents and fault currents and consisting of either helical tapes or helical wires or both

The modified high voltage cable 70 differs from the unmodified high voltage cable 70A shown in figure 5 by the lack of reinforcement layers 92 whose role in providing tensile strength is taken over by the tensile armor 72.

The reinforcement layers 92 of the unmodified high voltage cable 70A are too thin to take over mooring forces and cannot contribute to withstand dynamic tensile strength without the tensile armor 72.

The tensile armor 72 comprises at least two layers 72A, 72B of tensile armors

Each armor layer 72A, 72B has longitudinal armor elements 110 wound with a long pitch about the axis A-A' of the mooring structure 14.

"Wound with a long pitch" means that the absolute value of the helix angle in relation to the axis of the offshore mooring structure 14 is less than 60°, and is typically between 10° and 60°, particularly between 25° and 55°.

The armor elements 110 of a first layer 72A are wound generally at an opposite angle to the armor elements 110 of a second layer 72B. Thus, if the winding angle of the armor elements 110 of the first layer 72A is equal to +α, with α being between 10° and 60°, the winding angle of the armor elements 110 of the second armor layer 72B arranged in contact with the first armor layer 72A is equal to - α°, for example.

The armor elements 110 are formed by metal wires, for example, in particular steel wires, or by tapes of composite material, such as carbon fiber reinforced tapes.

The metal material forming the armor elements 110 is advantageously selected from carbon steel, in particular selected from grades of carbon steel comprising between 0.1% and 0.8% carbon. For applications in particularly corrosive environments, the metallic material is chosen from among stainless steels such as duplex steels. Stainless steel is preferably used on individual phase cables to increase the cables stiffness thereby improving movement within the structure when flexed. The stainless steel is required on individual phases to prevent magnetic losses, however it is not required when armouring a three-phases cable.

Thus, a ratio of a tensile strength at break of the offshore mooring structure 14 comprising the high voltage cable 70 and the tensile armor 72 to a tensile strength at break of the high voltage cable 70 without the tensile armor 72 is preferably greater than 1.1.

The optional internal leak-proof sheath 71A is positioned around the outer serving layer 94 (for example by extrusion) to tightly isolate the high voltage cable 70 from the surrounding environment. Therefore, water treeing, electrical insulation losses, ageing in moist environment issues may be avoided.

The internal leak-proof sheath 71A is formed of a polymeric material, for example based on a polyolefin such as polyethylene, based on a polyamide such as PA11 or PA12, or based on a fluorinated polymer such as polyvinylidene fluoride (PVDF).

The thickness of the internal leak-proof sheath 71A is for example comprised between 5 mm and 20 mm.

With reference to Figure 1, the radial load withstanding layer 71B is intended to absorb the radial loads which occur when the offshore mooring structure 14 is subjected to high tensile loads due to the mooring function. The radial load withstanding layer 71B also resists to collapse and avoids squeezing effect of the high voltage cable 70, in particular of the electrical conductors 80. Also, the radial load withstanding layer 71B is useful for spooling/unspooling and laying operations of the offshore mooring structure 14.

In a particular example, the radial load withstanding layer 71B is formed with a helicoidally wound metal or composite wire positioned around the internal leak-proof sheath 71A, when present, or around the high voltage cable 70.

The wire may be a profiled wire having a complex geometry, in particular Z-shaped, T-shaped, U-shaped, K-shaped, X-shaped or I-shaped.

The radial load withstanding layer 71B is helicoidally wound with a short pitch on the internal leak-proof sheath 71A, when present, or on the high voltage cable 70. "Wound with a short pitch" means that the absolute value of a helix angle in relation to the axis of the offshore mooring structure 14 is close to 90°, typically comprised between 75° and 90°.

The optional external leak-proof sheath 73 is positioned around the tensile armor 72 (for example by extrusion) to tightly isolate the tensile armor 72 from the surrounding environment. Therefore, armor corrosion issues may be avoided or at least limited.

The external leak-proof sheath 73 is formed of a polymeric material, for example based on a polyolefin such as polyethylene, based on a polyamide such as PA11 or PA12, or based on a fluorinated polymer such as polyvinylidene fluoride (PVDF).

The thickness of the external leak-proof sheath 73 is for example comprised between 5 mm and 20 mm.

The combination of the tensile armor 72 and of the radial load withstanding layer 71B without a central strain wire prevent the central high voltage cable 70 (in particular its conductors 80) from potential damages when the offshore mooring structure 14 is bent. Indeed, the conductors 80 remain close to the neutral fiber of the offshore mooring structure 14.

Leak-proofness provided by at least one of the leak-proof layers 71A, 73 allow in some instances the use of low-cost materials and make possible for the high voltage cable 70 to withstand higher tensions, as its components are no longer subjected to deteriorations due to water ingress.

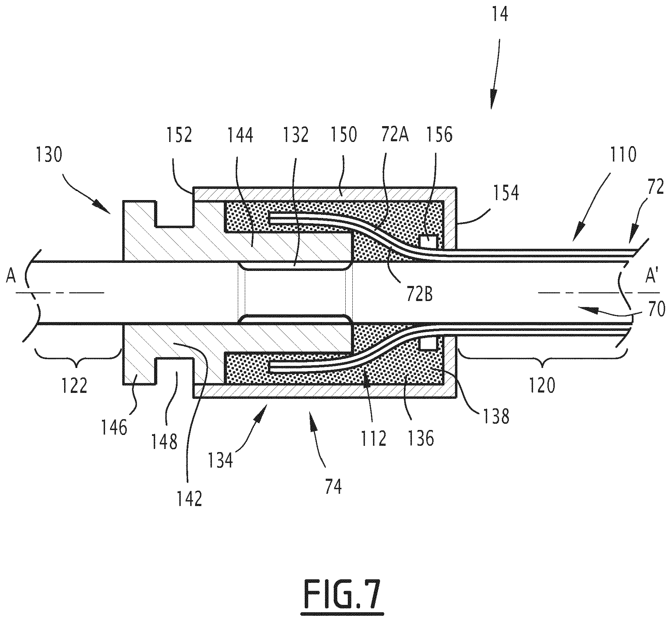

In reference to figure 7, the armor elements 110 of each armor layer 72A, 72B have end segments 112 received in the end fitting 74. Also, the end sections (not shown) of the optional internal leak-proof sheath 71A, of the radial load withstanding layer 71B and of the external leak-proof sheath 73 are received in the end fitting 74.

As will be described below, the end fitting 74 is fixed around the high voltage cable 70 in the vicinity of the lower end 60 of the offshore mooring structure 14.

The end fitting 74 is mounted on the outer serving 94 of the high voltage cable 70.

On one side of the end fitting 74, the high voltage cable 70 has a main portion 120 extending in catenary shape to the surface assembly 16. On the other side of the end fitting 74, the high voltage cable 70 has a shorter free end portion 122 defining the lower end 60 of the mooring structure 16. The lower end 60 is preferentially equipped with a lower end electrical connector 124.

As shown in figure 7, the end fitting 74 comprises an end vault 130, resting on the outer serving 94 and a crimping assembly 132 crimping the end vault 130 to the outer surface of the outer serving 94.

The end fitting 74 further comprises an outer cover 134 defining with the end vault 130 an inner peripheral chamber 136 receiving the end segments 112 of the armor elements 110. It further comprises a fixing mechanism 138 fixing the end segments 112 into the chamber 136.

The end fitting 74 further comprises optionally a maintaining ring 156 disposed into the chamber 136 to maintain the upper part of the armor elements close to the outer serving 94.

The end vault 130 here as an outer part 142 protruding longitudinally outside of the outer cover 134 towards the lower end 60, and an inner part 144, received into the outer cover 134.

The outer part 142 has an end flange 146 defining with the inner part 144, an annular groove 148 in which the support 58 of the anchor 20 is fixed.

The outer cover 134 has a peripheral wall 150, fixed at its lower edge 152 on the outer periphery of the end vault 130 and a transverse upper wall 154 connecting the peripheral wall 150 to the armor layer 72.

The chamber 136 is defined between the inner part 144 of the end vault 130, the peripheral wall 150, and the transverse upper wall 154.

In the chamber 136, the end segments 112 spread radially apart from the axis A-A' of the high voltage cable 70 in the intermediate space between the inner part 144 and the peripheral wall 150.

In the example of figure 7, the fixing mechanism 138 comprises a resin block 138 which has been cast and set into the chamber 136 to embed the end segments 112 of the armor elements 110.

In a variant or in a complement (not shown), the fixing mechanism 138 comprises at least a clamp for clamping the end segments 112 of the armor elements 110.

The free end portion 122 has a length which is smaller than the length of the main portion 120.

The free end portion 122 has less armor layers than the main portion 120, and in some instances has no armor layers. In particular, if the number of armor layers 72A, 72B on the main portion is equal to 2, the number of armor layers on the free end portion 122 is one or zero.

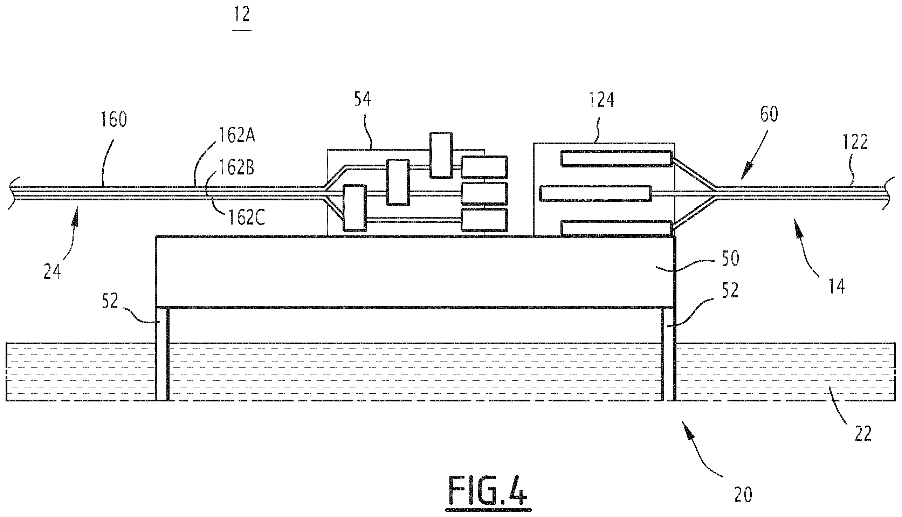

In reference to figure 4, each collection strip 24 comprises a three-phase high voltage cable 160 comprising three conductors 162A, 162B, 162C. The high voltage cable 160 passes through a line of successive anchors 20.

The anchor electrical connector 54 located on each anchor 20 has three connections, each connection being connected to a specific conductor 162A, 162B, 162C of the high voltage cable 160.

The end connector 124 is able to connect to the anchor connector 54 to selectively electrically connect each conductor 80A, 80B, 80C of the inner high voltage cable 70 to a respective conductor 162A, 162B, 162C of the collection strip 24 .

As shown in figure 1, the peripheral export ring 26 has an upstream branch 170, an upstream side branch 172 to which first ends of the collection strips 24 are connected, a connection branch 174, and a downstream side branch 176 to which second ends of the collection strips 24 are connected.

The upstream branch 170 and the downstream side branch 176 are connected to the export cable 28.

The branches 170, 172, 174, 176 pass through peripheral anchors 20 of the offshore installation 10 and are connected to connectors 54 on these anchors.

As shown in figure 1, each collection strip 24 extends between the side branches 172, 174 of the peripheral export ring 26 passing through a plurality of anchors 20.

In the example of figure 1, the collection strips 24 extend parallel to one another along parallel lines of anchors 20.

The offshore installation 10 is without a subsurface substation.

An offshore mooring structure 14 according to the invention can be manufactured onshore, by providing a high voltage cable 70, followed by optionally providing an internal leak-proof layer 71A (for example by extrusion), by winding the radial load withstanding layer 71B and tensile armor layers 72A, 72B around the high voltage cable 70 and by setting up an end fitting 74 in the vicinity of the lower end 60.

The setting up of the end fitting 74 comprises placing the end segments 112 of the armor elements 110 into a chamber 136 defined between an outer cover 134, an end vault 130 and the outer serving 94. It further comprises putting in place the fixing mechanism 138, for example by casting a resin in the chamber 136 and by letting the resin set.

The setup of the installation 10 is carried out by installing anchors 20 in the bottom 22 of the body of water 20 and by transporting surface assemblies 16 carrying equipment 18 to the installation site.

Moorings comprising at least an offshore mooring structure 14 according to the invention are then set in place between each surface assembly 16 and several anchors 20, for example three anchors 20.

The end fitting 74 of the offshore mooring structure 14 is fit on the support 58 connected by at least a link 56 to the base of the anchor 20.

The lower end connector 124 of the offshore mooring structure 16 is then connected to the anchor connector 54 on the anchor 20 to provide an electrical connection between the equipment 18 and the collection strip 24 up to the peripheral export ring 26 and to the export cable 28.

The offshore mooring structure 14 according to the invention allows a safe and robust mooring of a surface assembly 16 carrying equipment 18 producing or consuming electrical power to an anchor 20 at the bottom 22 of the body of water 12, with a stable catenary configuration having sufficient tensile strength to resist strains caused by wind, currents and swell.

The same offshore mooring structure 14 is used to provide a high voltage electrical connection between the equipment 18 and the export cable 28 through the collection strips 24 and the peripheral export ring 26.

No specific electrical cables with dynamic properties are therefore needed in the installation 10 according to the invention.

The number of mooring lines and electrical cables is therefore much lower than in traditional installations, and the need of an electrical substation is removed.

The capital expenditures of the installation 10 are greatly decreased and the installation can be easily maintained. Therefore, the qualification of the offshore mooring structure 14 is greatly simplified to resist dynamic strength and allow high voltage transmission.

Such advantages are due in particular to the provision, in the offshore mooring structure 14 of an end fitting 74 fixing armor layers 72A, 72B wound around a simple pseudo-dynamic high voltage cable 70, instead of having to provide and maintain a very complex dynamic high voltage cable.

The armoring layers 72A, 72B and the catenary configuration of the offshore mooring structure 14 also greatly decrease the risk of endurance fatigue of the metal sheet 86 which is normally observed on high voltage dynamic cables.

In addition, the short-pitch radial load withstanding layer 71B also provides a substantial resistance to collapse and prevents squeezing of the high voltage cable 70, in particular during use in mooring, but also for spooling/unspooling and laying operations of the offshore mooring structure 14.

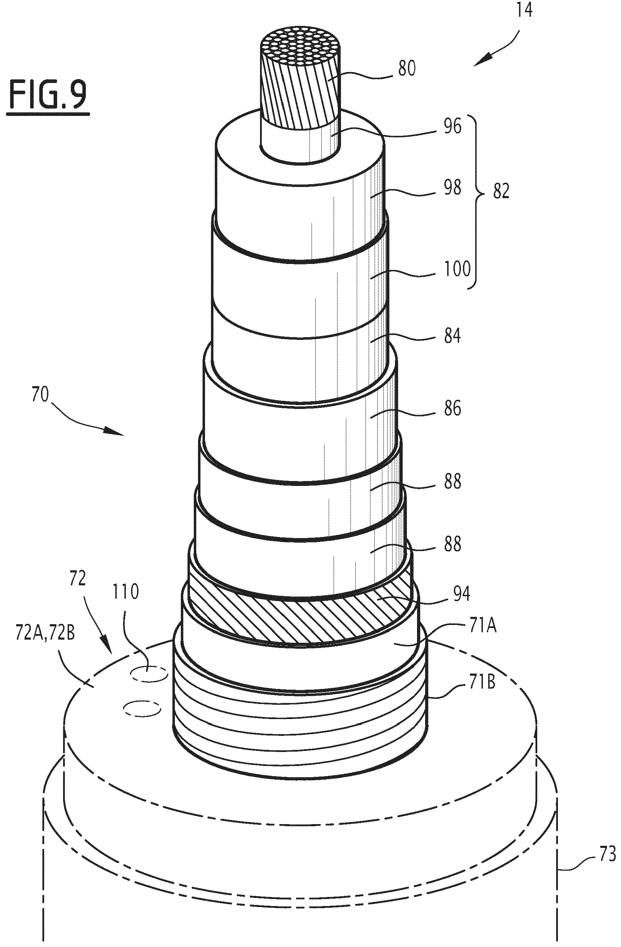

In a variant shown in figures 8 and 9, each electrical phase of an equipment 18 is sent to a particular offshore mooring structure 14 according to the invention connected to a specific anchor 20.

As shown in figure 9, the high voltage cable 70 is therefore a mono-core cable (1C) comprising only one conductor 80. The connector 54 on each anchor 20 is connected to three different offshore mooring structures 14, each being connected to an equipment 18 on a specific surface assembly 16. Each offshore mooring structure 14 connected to the same anchor 20 has a different phase which is connected to only one conductor 162A, 162B, 162C of the collection strip 24.

## Claims

1. An offshore mooring structure (14) intended to connect an offshore surface assembly (16) to an underwater anchor (20), comprising :
- a high voltage cable (70) comprising at least one conductor (80A, 80B, 80C; 80);
- at least an external armor layer (72A, 72B) surrounding the high voltage cable (70), the armor layer (72A, 72B) having at least an armor element (110) having an end segment (112);
- an end fitting (74), mounted on the high voltage cable (70),
**characterized in that** the end fitting (74) defines at least one chamber (136) receiving and immobilizing the end segment (112) of the at least an armor element (110) of the armor layer (72A, 72B), the high voltage cable (70) having a free end portion (122) extending beyond the end fitting (74) opposite a main portion (120) of the high voltage cable (70).

2. The offshore mooring structure (14) according to claim 1, wherein the end fitting (74) comprises an end vault (130) surrounding the high voltage cable (70) and applied to the high voltage cable (70) and an outer cover (134), the end vault (130) and the outer cover (134) defining a chamber (136) receiving the end segments (112) of the at least one armor element (110), the at least one armor element (110) being fixed in the chamber (136).

3. The offshore mooring structure (14) according to claim 2, wherein the end segments (112) of the at least one armor element (110) are fixedly embedded in a resin and/or are clamped in the chamber (136).

4. The offshore mooring structure (14) according to any one of the preceding claims, comprising a radial load withstanding layer (71B) positioned between the high voltage cable (70) and the at least one external armor layer (72A, 72B), the radial load withstanding layer (71B) optionally having at least a wire wound at short pitch between the high voltage cable (70) and the at least one external armor layer (72A, 72B).

5. The offshore mooring structure (14) according to claim 4, comprising an internal leak-proof sheath (71A) positioned between the high voltage cable (70) and the radial load withstanding layer (71B), and optionally, an external leak-proof sheath (73) located around the at least one external armor layer (72A, 72B).

6. The offshore mooring structure (14) according to any one of the preceding claims, wherein the high voltage cable (70) is a one conductor cable or a three conductors cable.

7. The offshore mooring structure (14) according to any one of the preceding claims, wherein the high voltage cable (70) comprises, surrounding the or each conductor (80A, 80B, 80C; 80), a dielectric system (82), and at least an outer layer (86), the high voltage cable (70) further comprising a common outer serving (94) positioned around the or each outer layer (86).

8. The offshore mooring structure (14) according to claim 7, wherein the outer layer (86) is a metal or polymeric continuous sheath or is a metal open screen.

9. An offshore installation (10) located in a body of water (12), comprising:
- at least a surface assembly (16);
- at least an equipment (18) carried by the surface assembly (16), the equipment (18) being able to produce and/or consume electrical power, the equipment (18) being advantageously a wind turbine, a tidal turbine, an electrolyzer, and/or a fuel cell ;
- at least an anchor (20) to maintain the surface assembly (16) in position in the body of water (12);
- an offshore mooring structure (14) according to any one of the preceding claims, electrically and mechanically connecting the anchor (20) to the surface assembly (16).

10. The installation (10) according to claim 9, wherein the anchor (20) comprises an external base (50) and at least an internal leg (52) introduced in the ground at the bottom of the body of water (12), the end fitting (74) being attached to the base (50), the anchor (20) comprising at least a flexible link (56) connecting the offshore mooring structure (14) end fitting (74) to the base (50).

11. The installation (10) according to any one to claims 9 or 10, wherein the anchor (20) comprises an anchor electrical connector (54), the free end portion (122) of the offshore mooring structure (14) being electrically connected to the anchor electrical connector (54).

12. The installation (10) according to claim 11, comprising at least a collection or distribution strip (24) passing at the anchor (20), the anchor electrical connector (54) electrically connecting the free end portion (122) of the offshore mooring structure (14) to the collection or distribution strip.

13. The installation (10) according to any one of claims 9 to 12, wherein the free end portion (122) of the offshore mooring structure (14) has at most one external armor layer (72A, 72B), preferentially has no external armor layer (72A, 72B).

14. The installation (10) according to any one of claims 9 to 13, wherein the or each mooring structure (14) has a catenary shape between the surface assembly (16) and the anchor (20).

15. The installation (10) according to any one of claims 9 to 14, comprising several surface assemblies (12) located around the anchor (20), the same anchor (20) being connected to the several surfaces surface assemblies, by several respective offshore mooring structures (14) according to any one of claims 1 to 8.

## Patentansprüche

1. Offshore-Verankerungsstruktur (14) zum Verbinden einer Offshore-Oberflächenanordnung (16) mit einem Unterwasseranker (20), umfassend:
- ein Hochspannungskabel (70), umfassend mindestens einen Leiter (80A, 80B, 80C; 80);
- mindestens eine äußere Armierungsschicht (72A, 72B), die das Hochspannungskabel (70) umgibt, wobei die Armierungsschicht (72A, 72B) mindestens ein Armierungselement (110) mit einem Endsegment (112) aufweist;
- ein Endstück (74), das am Hochspannungskabel (70) montiert ist,
**dadurch gekennzeichnet, dass** das Endstück (74) mindestens eine Kammer (136) definiert, die das Endsegment (112) des mindestens einen Armierungselements (110) der Armierungsschicht (72A, 72B) aufnimmt und fixiert, wobei das Hochspannungskabel (70) einen freien Endabschnitt (122) aufweist, der sich über das Endstück (74) hinaus gegenüber einem Hauptabschnitt (120) des Hochspannungskabels (70) erstreckt.

2. Offshore-Verankerungsstruktur (14) nach Anspruch 1, wobei das Endstück (74) einen Endhohlraum (130) umfasst, der das Hochspannungskabel (70) umgibt, und auf das Hochspannungskabel (70) und eine äußere Abdeckung (134) aufgebracht ist, wobei der Endhohlraum (130) und die äußere Abdeckung (134) eine Kammer (136) definieren, die die Endsegmente (112) des mindestens einen Armierungselements (110) aufnimmt, wobei das mindestens eine Armierungselement (110) in der Kammer (136) fixiert ist.

3. Offshore-Verankerungsstruktur (14) nach Anspruch 2, wobei die Endsegmente (112) des mindestens einen Armierungselements (110) fest in ein Harz eingebettet und/oder in der Kammer (136) eingeklemmt sind.

4. Offshore-Verankerungsstruktur (14) nach einem der vorhergehenden Ansprüche, umfassend eine radiale lasttragende Schicht (71B), die zwischen dem Hochspannungskabel (70) und der mindestens einen äußeren Armierungsschicht (72A, 72B) positioniert ist, wobei die radiale lasttragende Schicht (71B) optional mindestens einen Draht aufweist, der mit kurzer Steigung zwischen dem Hochspannungskabel (70) und der mindestens einen äußeren Armierungsschicht (72A, 72B) gewickelt ist.

5. Offshore-Verankerungsstruktur (14) nach Anspruch 4, umfassend eine innere lecksichere Hülle (71A), die zwischen dem Hochspannungskabel (70) und der radialen lasttragenden Schicht (71B) positioniert ist, und optional eine äußere lecksichere Hülle (73), die mindestens um die äußere Armierungsschicht (72A, 72B) angeordnet ist.

6. Offshore-Verankerungsstruktur (14) nach einem der vorhergehenden Ansprüche, wobei das Hochspannungskabel (70) ein einadriges Kabel oder ein dreiadriges Kabel ist.

7. Offshore-Verankerungsstruktur (14) nach einem der vorhergehenden Ansprüche, wobei das Hochspannungskabel (70), die oder jede Ader (80A, 80B, 80C; 80) umgebend, ein dielektrisches System (82) und mindestens eine äußere Schicht (86) umfasst, wobei das Hochspannungskabel (70) weiter eine gemeinsame äußere Ummantelung (94) umfasst, die um die oder jede äußere Schicht (86) positioniert ist.

8. Offshore-Verankerungsstruktur (14) nach Anspruch 7, wobei die äußere Schicht (86) eine durchgehende Metall- oder Polymerhülle ist oder ein offenes Metallgitter ist.

9. Offshore-Anlage (10), die sich in einem Gewässer (12) befindet, umfassend:
- mindestens eine Oberflächenanordnung (16);
- mindestens eine Ausrüstung (18), die von der Oberflächenanordnung (16) getragen wird, wobei die Ausrüstung (18) dazu in der Lage ist, elektrische Energie zu erzeugen und/oder zu verbrauchen, wobei die Ausrüstung (18) vorteilhafterweise eine Windkraftanlage, eine Gezeitenkraftanlage, ein Elektrolyseur und/oder eine Brennstoffzelle ist;
- mindestens einen Anker (20), um die Oberflächenanordnung (16) in ihrer Position im Gewässer (12) zu halten;
- eine Offshore-Verankerungsstruktur (14) nach einem der vorhergehenden Ansprüche, die den Anker (20) elektrisch und mechanisch mit der Oberflächenanordnung (16) verbindet.

10. Anlage (10) nach Anspruch 9, wobei der Anker (20) eine äußere Basis (50) und mindestens einen inneren Schenkel (52) umfasst, die in den Grund am Boden des Gewässers (12) eingeführt sind, wobei das Endstück (74) an die Basis (50) befestigt ist, wobei der Anker (20) mindestens ein flexibles Verbindungsglied (56) umfasst, das das Endstück (74) der Offshore-Verankerungsstruktur (14) mit der Basis (50) verbindet.

11. Anlage (10) nach einem der Ansprüche 9 oder 10, wobei der Anker (20) einen elektrischen Ankeranschluss (54) umfasst, wobei der freie Endabschnitt (122) der Offshore-Verankerungsstruktur (14) elektrisch mit dem elektrischen Ankeranschluss (54) verbunden ist.

12. Anlage (10) nach Anspruch 11, umfassend mindestens eine Sammel- oder Verteilerleiste (24), die am Anker (20) entlangführt, wobei der elektrische Ankeranschluss (54) den freien Endabschnitt (122) der Offshore-Verankerungsstruktur (14) elektrisch mit der Sammel- oder Verteilerleiste verbindet.

13. Anlage (10) nach einem der Ansprüche 9 bis 12, wobei der freie Endabschnitt (122) der Offshore-Verankerungsstruktur (14) höchstens eine äußere Armierungsschicht (72A, 72B) aufweist, vorzugsweise keine äußere Armierungsschicht (72A, 72B) aufweist.

14. Anlage (10) nach einem der Ansprüche 9 bis 13, wobei die oder jede Verankerungsstruktur (14) zwischen der Oberflächenanordnung (16) und dem Anker (20) eine Kettenlinie aufweist.

15. Anlage (10) nach einem der Ansprüche 9 bis 14, umfassend mehrere Oberflächenanordnungen (12), die um den Anker (20) angeordnet sind, wobei der gleiche Anker (20) mit den verschiedenen Oberflächenanordnungen durch mehrere jeweilige Offshore-Verankerungsstrukturen (14) nach einem der Ansprüche 1 bis 8 verbunden ist.

## Revendications

1. Structure d'amarrage en mer (14) destinée à raccorder un ensemble de surface en mer (16) à un ancrage sous-marin (20), comprenant :
- un câble haute tension (70) comprenant au moins un conducteur (80A, 80B, 80C ; 80) ;
- au moins une couche d'armure externe (72A, 72B) entourant le câble haute tension (70), la couche d'armure (72A, 72B) ayant au moins un élément d'armure (110) ayant un segment d'extrémité (112) ;
- un raccord d'extrémité (74), monté sur le câble haute tension (70),
**caractérisée en ce que** le raccord d'extrémité (74) définit au moins une chambre (136) recevant et immobilisant le segment d'extrémité (112) du au moins un élément d'armure (110) de la couche d'armure (72A, 72B), le câble haute tension (70) ayant une partie d'extrémité libre (122) s'étendant au-delà du raccord d'extrémité (74) à l'opposé d'une partie principale (120) du câble haute tension (70).

2. Structure d'amarrage en mer (14) selon la revendication 1, dans laquelle le raccord d'extrémité (74) comprend une voûte d'extrémité (130) entourant le câble haute tension (70) et appliquée sur le câble haute tension (70) et un couvercle externe (134), la voûte d'extrémité (130) et le couvercle externe (134) définissant une chambre (136) recevant les segments d'extrémité (112) du au moins un élément d'armure (110), l'au moins un élément d'armure (110) étant fixé dans la chambre (136).

3. Structure d'amarrage en mer (14) selon la revendication 2, dans laquelle les segments d'extrémité (112) du au moins un élément d'armure (110) sont intégrés, de manière fixe, dans une résine et/ou sont serrés dans la chambre (136).

4. Structure d'amarrage en mer (14) selon l'une quelconque des revendications précédentes, comprenant une couche résistant à la charge radiale (71B) positionnée entre le câble haute tension (70) et l'au moins une couche d'armure externe (72A, 72B), la couche résistant à la charge radiale (71B) ayant facultativement au moins un fil enroulé à pas raccourci entre le câble haute tension (70) et l'au moins une couche d'armure externe (72A, 72B).

5. Structure d'amarrage en mer (14) selon la revendication 4, comprenant une gaine interne étanche (71A) positionnée entre le câble haute tension (70) et la couche résistant à la charge radiale (71B), et facultativement, une gaine externe étanche (73) située autour de 'au moins une couche d'armure externe (72A, 72B).

6. Structure d'amarrage en mer (14) selon l'une quelconque des revendications précédentes, dans laquelle le câble haute tension (70) est un câble à un conducteur ou un câble à trois conducteurs.

7. Structure d'amarrage en mer (14) selon l'une quelconque des revendications précédentes, dans laquelle le câble haute tension (70) comprend, autour du ou de chaque conducteur (80A, 80B, 80C ; 80), un système diélectrique (82), et au moins une couche externe (86), le câble haute tension (70) comprenant en outre une enveloppe commune externe (94) positionnée autour de la ou de chaque couche externe (86).

8. Structure d'amarrage en mer (14) selon la revendication 7, dans laquelle la couche externe (86) est une gaine continue métallique ou polymérique ou est un écran métallique ouvert.

9. Installation en mer (10) située dans une étendue d'eau (12), comprenant :
- au moins un ensemble de surface (16) ;
- au moins un équipement (18) porté par l'ensemble de surface (16), l'équipement (18) pouvant produire et/ou consommer de la puissance électrique, l'équipement (18) étant, de manière avantageuse, une éolienne, une hydrolienne, un électrolyseur, et/ou une pile à combustible ;
- au moins un ancrage (20) destiné à maintenir l'ensemble de surface (16) en position dans l'étendue d'eau (12) ;
- une structure d'amarrage en mer (14) selon l'une quelconque des revendications précédentes, raccordant électriquement et mécaniquement l'ancrage (20) à l'ensemble de surface (16).

10. Installation (10) selon la revendication 9, dans laquelle l'ancrage (20) comprend une base externe (50) et au moins un pied interne (52) introduit dans le sol au fond de l'étendue d'eau (12), le raccord d'extrémité (74) étant fixé à la base (50), l'ancrage (20) comprenant au moins un lien flexible (56) raccordant le raccord d'extrémité (74) de la structure d'amarrage en mer (14) à la base (50).

11. Installation (10) selon l'une quelconque des revendications 9 ou 10, dans laquelle l'ancrage (20) comprend un connecteur électrique d'ancrage (54), la partie d'extrémité libre (122) de la structure d'amarrage en mer (14) étant électriquement raccordée au connecteur électrique d'ancrage (54).

12. Installation (10) selon la revendication 11, comprenant au moins une bande de collecte ou de distribution (24) passant au niveau de l'ancrage (20), le connecteur électrique d'ancrage (54) raccordant électriquement la partie d'extrémité libre (122) de la structure d'amarrage en mer (14) à la bande de collecte ou de distribution.

13. Installation (10) selon l'une quelconque des revendications 9 à 12, dans laquelle la partie d'extrémité libre (122) de la structure d'amarrage en mer (14) comprend au maximum une couche d'armure externe (72A, 72B), et de préférence ne comporte pas de couche d'armure externe (72A, 72B).

14. Installation (10) selon l'une quelconque des revendications 9 à 13, dans laquelle la ou chaque structure d'amarrage (14) a une forme en chaînette entre l'ensemble de surface (16) et l'ancrage (20).

15. Installation (10) selon l'une quelconque des revendications 9 à 14, comprenant plusieurs ensembles de surface (12) situés autour de l'ancrage (20), le même ancrage (20) étant raccordé aux plusieurs ensembles de surface, par plusieurs structures d'amarrage en mer (14) respectives selon l'une quelconque des revendications 1 à 8.
